# EUROPÄISCHE PATENTSCHRIFT

(11) **EP 3 372 331 B1**
(45) Veröffentlichungstag und Bekanntmachung des Hinweises auf die Patenterteilung: **30.11.2022**
(21) Anmeldenummer: 18159804.6
(22) Anmeldetag: 02.03.2018
(51) Int. Cl.: B23D 59/00, B27B 5/06

(54) **VERFAHREN ZUM AUFTEILEN EINES PLATTENFÖRMIGEN WERKSTÜCKS**
METHOD OF DIVIDING A PANEL-SHAPED WORKPIECE
PROCÉDÉ DE RÉPARTITION D'UNE PIÈCE À USINER EN FORME DE PLAQUE

(30) Priorität: 09.03.2017 DE 102017002271
(43) Veröffentlichungstag der Anmeldung: 12.09.2018
(73) Patentinhaber: IMA Schelling Deutschland GmbH, 32312 Lübbecke (DE)
(72) Erfinder: Hielscher, Ulrich, 32312 Lübbecke (DE); Tiemeyer, Eckhard, 32312 Lübbecke (DE); Seifert, Uwe, 32361 Preußisch Oldendorf (DE)
(74) Vertreter: Schober, Mirko

(56) Entgegenhaltungen:
- EP-A1- 2 143 517
- EP-A2- 1 147 867
- WO-A1-99/61212
- DE-A1-102007 045 086
- DE-B3-102015 008 891
- US-A1- 2003 192 412

## Beschreibung

Die Erfindung betrifft ein Verfahren zum Aufteilen eines großformatigen plattenförmigen Werkstücks nach dem Oberbegriff des Anspruchs 1.

Unter plattenförmigen Werkstücken sind im Folgenden insbesondere solche Werkstücke zu verstehen, deren Abmessungen in zwei zueinander rechtwinkligen Haupterstreckungsrichtungen wesentlich größer sind als in einer dritten, zu den Haupterstreckungsrichtungen senkrechten Dickenrichtung.

EP 1 147 867 A2 offenbart ein Verfahren zur Orientierung von großformatigen plattenförmigen Werkstücken nach dem Oberbegriff des Anspruchs 1, wobei das Werkstück in eine Mehrzahl kleinerer plattenförmiger Werkstücke aufgeteilt wird. Zur Orientierung sind definierte Punkte im Dekor vorgegeben oder aber Markierungen am Rand angebracht. Im ersten Fall werden vorhandene Auffälligkeiten genutzt, also keine Markierungen auf die Flächenseite aufgebracht. Im zweiten Fall werden die Markierungen am Rand angebracht; sie sollen das Dekor nicht stören. Da sie nur zur Aufteilung der großformatigen Werkstücke genutzt werden, ist es naheliegend, dass die aufgebrachten Markierungen am Rand und damit auf dem Verschnitt angeordnet werden.

US 2003/192412 A1 offenbart ebenfalls Markierungen, welche Defekte kennzeichnen, jedoch nicht für die Steuerung der Aufteilung einer großformatigen Platte benutzt werden.

WO 99/61212 A1 offenbart Markierungen zur Ausrichtung des großformatigen Werkstücks. Diese Markierungen befinden sich auf dem abgetrennten Verschnitt, stehen also bei der weiteren Verarbeitung der herausgetrennten Fertigteile nicht zur Verfügung.

EP 2 143 517 A1 offenbart optische Erfassungssysteme wie Laserscanner oder CCD-Kameras, die dazu ausgelegt sind, Bohrlöcher zu erfassen, an denen die Ausrichtung der Platte erfolgt.

DE 10 2007 045086 A1 offenbart die Kennzeichnung der Bereiche von (später) separierten Fertigteilen, die der Identifizierung dienen, und keinen Einfluss auf die Steuerung der Plattenaufteilung haben.

DE 10 2015 008891 B3 offenbart ein Verfahren zur Aufbringung von Kantenkaschierungen und eine Vorrichtung zur Messung von Dicken von Kantenkaschierungen.

Wie oben beschrieben, sind die hier zu betrachtenden plattenförmigen Werkstücke häufig das Ergebnis einer Aufteilung eines großformatigen plattenförmigen Werkstücks. Die großformatigen plattenförmigen Werkstücke stellen in diesem Sinne Halbzeuge dar, die häufig auf ihren Flächenseiten bereits eine für die spätere Verwendung geeignete Beschaffenheit aufweisen. Sie können beispielsweise eine Beschichtung aufweisen, oder eine bestimmte Oberflächenbehandlung erfahren haben.

Die Aufteilung des großformatigen plattenförmigen Werkstücks findet dabei regelmäßig mit spanabhebenden Bearbeitungsverfahren statt. So kommen beispielsweise Sägen und/oder Fräswerkzeuge zum Einsatz. Sägen bieten hierbei den Vorteil einer hohen Schnittleistung. Fräser lassen sich flexibler für die Durchführung von Schnitten mit kompliziertem, beispielsweise gekrümmtem, Verlauf einsetzen. Aus dem Stand der Technik sind bereits Verfahren bekannt, bei denen beide Typen von Werkzeugen gemeinsam zum Einsatz kommen, um die jeweiligen Vorteile zu kombinieren.

Abhängig davon, welche Formate die bei der Aufteilung der großformatigen plattenförmigen Werkstücke erzeugten plattenförmigen Werkstücke aufweisen sollen, werden für die Aufteilung der jeweiligen großformatigen plattenförmigen Werkstücke mehr oder weniger komplexe Schnittpläne erstellt. Diese legen die Positionen der durchzuführenden Schnitte fest. Bei der Erstellung der Schnittpläne wird dabei häufig eine Minimierung des Verschnitts bei gleichzeitig möglichst kurzen Bearbeitungszeiten bei der Aufteilung angestrebt.

Dies stellt, insbesondere bei der Einbindung der Aufteilung der großformatigen Werkstücke in weitere Produktionsprozesse, eine gewisse Herausforderung dar. Es ist nicht nur notwendig, eine entsprechende Steuereinrichtung für die Aufteilung der großformatigen Werkstücke zu programmieren, die Aufteilung der plattenförmigen Werkstücke muss auch logistisch in den gesamten Produktionsprozess, der regelmäßig noch weitere Bearbeitungen der erzeugten plattenförmigen Werkstücke beinhaltet, eingebunden werden. Im Hinblick auf den heutzutage üblichen Zeit- und Kostendruck konkurriert der Wunsch, zum einen eine hohe Flexibilität bei der Erstellung der Schnittpläne zur Minimierung des Verschnittes zu realisieren, zum anderen gleichzeitig die Produktionsabläufe möglichst einfach und sicher zu gestalten.

Der Erfindung liegt daher die Aufgabe zugrunde, ein Verfahren zum Aufteilen eines großformatigen plattenförmigen Werkstücks zur Verfügung zu stellen, das zur Vereinfachung der Einbindung der Aufteilung des großformatigen plattenförmigen Werkstücks in einen Produktionsprozess für die erzeugten plattenförmigen Werkstücke beiträgt.

Die Aufgabe wird gelöst durch ein Verfahren mit den Merkmalen des unabhängigen Anspruchs 1. Die Merkmale der abhängigen Ansprüche betreffen vorteilhafte Ausführungsformen.

Erfindungsgemäß werden Markierungen auf einer Flächenseite des großformatigen Werkstücks identifiziert, auf die Flächenseite des großformatigen Werkstücks aufgebracht und/oder in das großformatige Werkstück eingebracht. Diese Markierungen werden für die Steuerung der Aufteilung des großformatigen plattenförmigen Werkstücks genutzt und/oder die Markierungen werden in Abhängigkeit von der durchzuführenden Aufteilung positioniert. Insbesondere bedeutet dies, dass die Markierungen bereits vor und/oder während dessen Aufteilung in das großformatige Werkstück eingebracht, auf das großformatige Werkstück aufgebracht und/oder auf dem großformatigen Werkstück identifiziert werden. Wird das großformatige Werkstück aufgeteilt, so entstehen dabei einerseits gegebenenfalls weiter zu verarbeitende Fertigteile, andererseits auszusondernde Verschnittteile bzw. ein Verschnitt. Die Verschnittteile bzw. der Verschnitt werden erfindungsgemäß entweder ausgesondert oder zerspant. Bevorzugt ist dabei vorgesehen, dass die Markierungen auf Abschnitten des großformatigen Werkstücks identifiziert, aufgebracht und/oder eingebracht werden, die nach der vorgesehenen Vereinzelung noch auf den dann vereinzelten Fertigteilen zu deren Weiterverarbeitung vorhanden sind. Die genannten Markierungen werden also auf dem großformatigen Werkstück so vorgesehen, dass sie nach dem Aufteilen des großformatigen Werkstücks nicht auf dem Verschnitt bzw. den Verschnittteilen liegen.

In diesem Sinne ist eine einzige komplexe zusammenhängende Markierung ebenfalls als eine Kombination einer Mehrzahl einzelner Markierungen anzusehen. So kann beispielsweise ein einziges komplexes Muster auf die gesamte Flächenseite eines Werkstücks aufgebracht werden, das es ermöglicht, eine Mehrzahl definierter Positionen auf der Flächenseite zu identifizieren. In diesem Fall sind im Sinne der vorliegenden Erfindung die einzelnen definierten Positionen jeweils als individuelle Markierungen anzusehen.

Bei den Markierungen kann es sich um optisch erkennbare Markierungen handeln, die auf die Oberfläche des Werkstücks aufgebracht werden. Dies kann beispielsweise mittels Druckverfahren, insbesondere mittels Tintenstrahldruckverfahren, erfolgen. Darüber hinaus ist es jedoch auch möglich, Markierungen in das plattenförmige Werkstück einzubringen. Hierbei kann es sich beispielsweise um elektronische Markierungen, wie beispielsweise RFID-Chips, handeln. Es ist aber beispielsweise auch möglich, Magnete in das plattenförmige Werkstück einzubringen und diese im Zusammenhang mit der vorliegenden Erfindung als Markierungen zu verwenden.

Ebenfalls ist es möglich, Merkmale der Flächenseite als Markierungen zu identifizieren. Diese Merkmale können sich bevorzugt bereits vor Anwendung des erfindungsgemäßen Verfahrens auf der Flächenseite befinden. Hierbei handelt es sich insbesondere um optische Merkmale der Flächenseite. Hierbei kann es sich um ein grafisches Muster einer Beschichtung der Flächenseite handeln, alternativ und/oder ergänzend ist es beispielsweise auch möglich, eine natürliche Holzmaserung zu nutzen. Als Markierungen werden dann Positionen auf der Flächenseite identifiziert, die charakteristische Merkmale aufweisen, so dass diese von einer Erkennungseinrichtung erneut identifiziert werden können. So kann beispielsweise ein bestimmtes Oberflächenmuster in einer mit einem entsprechenden Datenspeicher ausgestatteten Steuereinrichtung gespeichert werden, um es als Markierung zu identifizieren.

Ein Hauptvorteil der erfindungsgemäßen Lösung ist es, dass die Markierungen auch in der Aufteilung der großformatigen Platte vor- und/oder nachgelagerten Bearbeitungsschritten genutzt werden können. So können die Markierungen beispielsweise bereits vor der Aufteilung des großformatigen Werkstücks auf dieses aufgebracht, in dieses eingebracht und/oder auf diesem identifiziert werden. Damit geht eine logistische Entkopplung einher, die es erlaubt, die Schnittpläne bereits vor der Aufteilung des großformatigen Werkstücks festzulegen und mit einem jeweiligen individuellen aufzuteilenden Werkstück zu verknüpfen. Die Aufteilung selber kann dann zeitlich nachgelagert nach den zuvor festgelegten Vorgaben erfolgen. Dies kann z.B. hilfreich sein, um die Planung der Produktion zu regulären Kernarbeitszeiten durchzuführen, während die Aufteilung selber im Schichtbetrieb stattfindet.

Hierbei können beispielsweise die Positionen der Markierungen benutzt werden, um eine Einrichtung zum Aufteilen des großformatigen Werkstücks, beispielsweise eine Säge und/oder ein Fräswerkzeug, anzusteuern. Hierdurch kann es beispielsweise überflüssig werden, das großformatige Werkstück für die Aufteilung exakt zu positionieren. Aus den Positionen der Markierungen kann die Position des großformatigen Werkstücks und damit die korrekte Position für die gewünschten durchzuführenden Schnitte bei der Aufteilung des großformatigen plattenförmigen Werkstücks ermittelt werden.

Ebenfalls ist es im Rahmen der vorliegenden Erfindung möglich, die Markierungen in Abhängigkeit der durchzuführenden Aufteilung zu positionieren. Dies bedeutet insbesondere, dass die Markierungen so positioniert werden, dass sie bei der Aufteilung des großformatigen Werkstücks nicht durch die durchgeführten Schnitte beeinträchtigt werden. Diese Vorgehensweise ist beispielsweise dann besonders vorteilhaft, wenn das plattenförmige großformatige Werkstück durch eine Einrichtung aufgeteilt wird, deren Steuerung die Schnitte, beispielsweise mittels eines Programms, an bestimmten Positionen des Werkstücks durchführt. Die Positionen der Markierungen können dann in vorteilhafter Weise so gewählt werden, dass die Markierungen, die vor der Aufteilung auf das großformatige Werkstück aufgebracht worden sind, bei der Aufteilung des großformatigen Werkstücks nicht durchtrennt und/oder anderweitig beeinträchtigt bzw. geschädigt werden.

Diese Vorgehensweise ist insbesondere dann vorteilhaft, wenn sich die Schnittpläne für einzelne großformatige Werkstücke voneinander unterscheiden. Es ist dann möglich, die Positionen der Markierungen für jedes großformatige Werkstück in Abhängigkeit von dem jeweiligen vorgesehenen Schnittplan festzulegen. Die Markierungen können dann bevorzugt unmittelbar nach der Aufteilung des Werkstücks für weitere Bearbeitungsschritte und/oder Logistikprozesse genutzt werden. So kann beispielsweise eine Verfolgung und/oder Identifikation jedes aus der Aufteilung hervorgehenden Werkstücks unmittelbar ab dem Moment erfolgen, in dem dieses bei der Aufteilung vom Rest des großformatigen Werkstücks getrennt wird. Dafür ist es wie oben beschrieben vorteilhaft, wenn sich die Markierungen zu diesem Zeitpunkt bereits auf, in oder an den durch die Aufteilung erzeugten Fertigteilen und nicht am abzutrennenden Verschnitt befinden.

Bei den plattenförmigen Werkstücken handelt es sich vorzugsweise um Werkstücke aus Holz oder Holzersatzwerkstoffen, wie Span- oder Holzfaserplatten, Laminate, HDF- oder MDF-Platten.

Die Markierungen können in vorteilhafter Weise Informationen über das großformatige Werkstück enthalten. Diese können beispielsweise in Form eines Barcodes und/oder eines QR-Code in den Markierungen enthalten sein. Es ist aber auch das Aufbringen ganzer Textfelder als Markierungen möglich. Die Markierungen können Informationen über die Beschaffenheit und/oder die Abmessungen enthalten. Ebenfalls ist es möglich, Informationen über durchzuführende Bearbeitungsschritte in die Markierungen aufzunehmen. So können die Markierungen beispielsweise Informationen darüber enthalten, wie, d.h. insbesondere nach welchem Schnittplan, ein großformatiges plattenförmiges Werkstück aufzuteilen ist. Es können aber auch Informationen in den Markierungen enthalten sein, die die Art und Weise einer weiteren Bearbeitung der durch die Aufteilung erzeugten Werkstücke, insbesondere eine Bearbeitung von deren Schmalseiten, betreffen. Hierbei kann es sich insbesondere um Informationen handeln, die eine ggf. auf die Schmalseiten aufzubringende Kaschierung, ein sogenanntes Kantenband, betreffen. Markierungen, die derartige Informationen enthalten, werden bevorzugt derart positioniert, dass sie sich auf und/oder in demjenigen durch die Aufteilung erzeugten Werkstück befinden, das sie betreffen.

Es ist allerdings auch möglich, dass die Informationen eine individuelle Identifikation des Werkstücks enthalten. Hierbei ist es möglich, sowohl das großformatige Werkstück mit derartigen Informationen zu identifizieren, als auch eine Identifikation der einzelnen durch die Aufteilung erzeugten Werkstücke durch jeweils zugeordnete Markierungen zu ermöglichen. Bei der individuellen Identifikation kann es sich beispielsweise um eine Seriennummer - im Klartext und/oder codiert - handeln.

Die individuelle Identifikation ermöglicht vorzugsweise eine eindeutige Identifizierung des durch die Aufteilung erzeugten Werkstücks im weiteren Produktionsprozess. Insbesondere im Zusammenhang mit einer Stückzahl-1-Fertigung ist die Möglichkeit, einzelne Werkstücke im Produktionsprozess jederzeit identifizieren zu können, vorteilhaft. Eine übergeordnete Steuerung kann dann bewirken, dass die einzelnen Bearbeitungsschritte jeweils mit den für das jeweilige Werkstück gewünschten individuellen Parametern durchgeführt werden. Auch können einzelne Werkstücke, die zu einem bestimmten, vorzugsweise individuell gefertigten, Produkt gehören, automatisiert zusammengestellt werden, insbesondere unabhängig davon, ob diese Werkstücke hintereinander bzw. gemeinsam den Produktionsprozess verlassen. Die individuelle Identifikation des Werkstücks erlaubt es vielmehr, einzelne Werkstücke gezielt bestimmten weiteren Bearbeitungs- und/oder Logistikprozessen zuzuführen.

Erfindungsgemäß werden die relativen Positionen der Markierungen zueinander vermessen und/oder die Markierungen an definierten relativen Positionen zueinander auf- und/ oder eingebracht. Auf diese Weise können die bekannten Positionen der Markierungen dazu genutzt werden, die Aufteilung des großformatigen Werkstücks zu steuern. Die Erfassung der Markierungen kann dabei insbesondere genutzt werden, um in Verbindung mit anderen bekannten oder gemessenen Relationen zwischen den Positionen der Markierungen und bestimmten Punkten des großformatigen Werkstücks, insbesondere Positionen der Schmalseiten des Werkstücks, das Format des Werkstücks zu ermitteln. Mit anderen Worten wird die - technisch aufwendige - direkte Positionierung der Schnitte in Abhängigkeit von den Schmalseiten des großformatigen Werkstücks ersetzt durch eine indirekte, bei der Abmessungsinformationen mit den relativen Positionen der Markierungen zueinander geometrisch bzw. rechnerisch kombiniert werden, um die korrekten Positionen der durchzuführenden Schnitte zu erhalten.

Besonders vorteilhaft ist es in diesem Zusammenhang, wenn die Markierungen in definierten Positionen relativ zu Schmalseiten des großformatigen plattenförmigen Werkstücks positioniert werden. Alternativ oder ergänzend ist es in vorteilhafter Weise möglich, dass die relativen Positionen der Markierungen zu Schmalseiten des großformatigen plattenförmigen Werkstücks gemessen werden. Es können bevorzugt technisch einfach und präzise zu messende kurze Abstände zwischen Markierungen und Schmalseiten ermittelt werden. In Verbindung mit den bekannten Abständen der Markierungen untereinander können so ungleich schwieriger und unpräziser zu messende Abstände zwischen Markierungen und weiter entfernt liegenden Schmalseiten rechnerisch ermittelt und für die Aufteilung genutzt werden.

Dies führt insbesondere auch dazu, dass aufgrund der bekannten Abstände zwischen Markierungen und Schmalseiten die Positionen der Schmalseiten des großformatigen Werkstücks durch die Ermittlung der Positionen der Markierungen ermittelt werden können. Somit kann schließlich die Position des Werkstücks während der Aufteilung ermittelt werden. Die bekannte Position des Werkstücks kann schließlich zur Schnittsteuerung, d.h. insbesondere zur relativen Ausrichtung des Werkstücks und der Werkzeuge, die die Schnitte durchführen, zueinander, genutzt werden. Die Ermittlung der Positionen der Markierungen gestaltet sich dabei technisch wesentlich einfacher als die - beispielsweise durch mechanische Anschläge oder Taster realisier-bare - Ermittlung der Position des Werkstücks selbst oder dessen exakte Ausrichtung in eine bestimmte Position für die Aufteilung, so dass eine insgesamt schnellere Aufteilung des Werkstücks erfolgen kann.

Vorzugsweise erfolgt die Erkennung der Markierungen, insbesondere die Ermittlung der Positionen der Markierungen, berührungslos. Die berührungslose Erkennung der Markierungen hat den Vorteil, dass sie schnell erfolgen kann. Regelmäßig haben berührungslose Verfahren den Vorteil, dass eine exakte Ausrichtung des Werkstücks relativ zu der Erkennungseinrichtung, mit der die Markierungen erkannt, insbesondere die Positionen der Markierungen ermittelt werden, nicht notwendig ist. Dies stellt insbesondere im Hinblick auf eine schnelle Erfassung der Markierungen und insbesondere derer Positionen in einem laufenden Produktionsprozess einen Vorteil dar.

Weiter vorzugsweise erfolgt die Erkennung der Markierungen, insbesondere die Ermittlung der Positionen der Markierungen, optisch. Eine optische Erkennung bietet den Vorteil, dass sie insbesondere mittels moderner digitaler Kamerasysteme, welche bevorzugt über eine zum Vermessen der Positionen der Markierungen geeignete Kalibrierung verfügen, vergleichsweise schnell, zuverlässig und kostengünstig realisiert werden kann.

Es ist von Vorteil, wenn die Erkennung der Markierungen, insbesondere die Ermittlung der Positionen der Markierungen, mit einer Mehrzahl Erkennungseinrichtungen erfolgt. Dies hat den Vorteil, dass eine einzelne Erkennungseinrichtung lediglich einen vergleichsweise kleinen Bereich des plattenförmigen Werkstücks erfassen muss.

Insbesondere wenn sich die Markierungen auf bestimmte Zonen bzw. Bereiche einer Flächenseite konzentrieren, wie beispielsweise die Bereiche der Ecken, können so mit der Erkennungseinrichtung gezielt nur die Bereiche des Werkstücks erfasst werden, in denen sich auch tatsächlich Markierungen befinden. Auf diese Weise kann beispielsweise bei der Verwendung einer Kamera als Erkennungseinrichtung ein Großteil der mit der Kamera aufzunehmenden und im Hinblick auf Markierungen auszuwertenden Bildfläche eingespart werden. Dies führt zu Einsparungen, sowohl im Hinblick auf die Kamerasysteme, da hier insgesamt eine niedrigere Gesamtzahl an Bildpunkten aufgenommen werden muss, als auch im Hinblick auf die benötigte Rechenleistung für die auszuwertende Anzahl an Bildpunkten.

In diesem Zusammenhang kann es auch vorteilhaft sein, wenn die Bereiche, in denen sich die Markierungen befinden, zunächst ermittelt werden. Diese Bereiche können dann durch die Erkennungseinrichtung gezielt ausgewertet werden. So kann beispielsweise bei der Verwendung einer Kamera zunächst mit einer Übersichtsaufnahme überprüft werden, in welchen Bereichen sich die Markierungen befinden, um dann die Markierungen mit entsprechenden höheren Auflösungen auszuwerten.

Besonders bevorzugt ist die Erkennungseinrichtung, insbesondere relativ zu einer weiteren Erkennungseinrichtung, verfahrbar. Dies ermöglicht es, dass gezielt die Bereiche, welche die Markierungen aufweisen, mit der Erkennungseinrichtung erfasst werden, auch wenn unterschiedliche plattenförmige Werkstücke sich hinsichtlich der Positionen ihrer Markierungen und/oder hinsichtlich ihrer Abmessungen unterscheiden. So ist es beispielsweise möglich, dass, wenn auf ein in Werkstücke mit einem kleinen Format aufzuteilendes Werkstück ein in Werkstücke mit einem großen Format aufzuteilendes Werkstück folgt, die Positionen der Erkennungseinrichtungen zwischen den Aufteilungen beider Werkstücke verändert werden. Auf diese Weise können dann beispielsweise Markierungen, die sich bei beiden Werkstücken im Bereich der auszuführenden Schnitte befinden, erfasst und deren Positionen bestimmt werden.

Erfindungsgemäß ist die Markierung eine optische Markierung, welche so beschaffen ist, dass sie für das menschliche Auge nicht sichtbar ist. Eine solche Markierung wirkt sich nicht störend auf die optische Erscheinung des Werkstücks bei seiner bestimmungsgemäßen Verwendung aus.

Hierfür können vorzugsweise optische, insbesondere fluoreszierende, Markierungen verwendet werden, die nur unter bestimmten Lichtverhältnissen, beispielsweise bei der Bestrahlung mit UV-Licht, für die Erkennungseinrichtung sichtbar werden. Alternativ und/oder ergänzend können die Markierungen auch so beschaffen sein, dass sich das von ihnen abgegebene bzw. reflektierte und/oder absorbierte Licht in einem für das menschliche Auge nicht sichtbaren Spektrum bewegt. Derartige Markierungen können dann beispielsweise durch spezielle Kameras im ultravioletten Bereich oder im Infrarotbereich, der für das menschliche Auge nicht sichtbar ist, nachgewiesen werden.

Ebenfalls möglich ist die Verwendung von Markierungen, die so beschaffen sind, dass sie nach einer definierten Zeitspanne für das menschliche Auge nicht mehr sichtbar sind. Dies kann beispielsweise mit Pigmenten erreicht werden, die sich nach einer gewissen Zeit zersetzen. Ein derartiger Zersetzungsprozess kann beispielsweise Folge der Einwirkung von Luftsauerstoff oder von natürlicher ultravioletter Strahlung sein. Unter einer definierten Zeitspanne ist in diesem Zusammenhang insbesondere eine Zeitspanne zu verstehen, die sich so genau bestimmen lässt, dass sichergestellt werden kann, dass die Markierungen bis zum Abschluss des erfindungsgemäßen Verfahrens für die Erkennungseinrichtung sichtbar bleiben und gleichzeitig bei Beginn der bestimmungsgemäßen Verwendung des Werkstücks für das menschliche Auge nicht mehr sichtbar sind. Es versteht sich, dass diese Zeitspanne in der Praxis gewissen Schwankungen, beispielsweise aufgrund unterschiedlicher Lichtverhältnisse, unterworfen sein kann.

Auch kann es vorteilhaft sein, wenn beispielsweise UVempfindliche Pigmente verwendet werden, die im Rahmen des erfindungsgemäßen Verfahrens bevorzugt gezielt mit UV-Licht bestrahlt werden. Sobald die Markierungen nicht mehr benötigt werden, können sie so gezielt "gelöscht" werden. Ebenfalls denkbar ist die Verwendung eines chemischen Löschverfahrens, mit dem sichtbare Markierungen durch eine Behandlung mit einer chemischen Substanz entfernt und/oder für das menschliche Auge unsichtbar gemacht werden.

Vorteilhafterweise ist es möglich, die erfindungsgemäßen Markierungen in einem nachgelagerten Bearbeitungsprozess und/oder Logistikprozess zu nutzen. Dies kann beispielsweise dann von Vorteil sein, wenn die plattenförmigen Werkstücke in einem nachgelagerten Bearbeitungsprozess zu komplexen Produkten weiterverarbeitet werden. So kann beispielsweise bei der Produktion von Möbeln der Zusammenbau der Möbel aus den plattenförmigen Werkstücken unter Zuhilfenahme der Markierungen gesteuert werden. Dies ist insbesondere im Zusammenhang mit Markierungen hilfreich, die Informationen über das jeweilige Werkstück enthalten. Alternativ und/oder ergänzend können die Markierungen auch in reinen Logistikprozessen genutzt werden. Auf diese Weise können Werkstücke beispielsweise unterschiedlichen Kommissionen zugeordnet werden.

Eine besonders vorteilhafte Verwendung der Markierungen in einem nachgelagerten Bearbeitungsprozess ist es, wenn die Markierungen zur Ermittlung der Dicke einer auf die Schmalseiten eines aus der Aufteilung des großformatigen Werkstücks hervorgegangenen Werkstücks aufgebrachten Kaschierung, insbesondere eines Kantenbandes, genutzt werden. Dies kann beispielsweise zum Zweck der Qualitätskontrolle geschehen. Es ist jedoch auch ebenfalls möglich, die so gewonnenen Daten über die Dicke der Kaschierung zu nutzen, um Bearbeitungsschritte, die dem Aufbringen der Kaschierung nachgelagert sind, zu steuern. Hierbei kann es sich insbesondere um Bearbeitungen spanabhebender Art, wie beispielsweise Fräsen und/oder Ziehen, handeln. Die genaue Kenntnis der tatsächlichen Dicke der Kaschierung erlaubt es hierbei, die Nachbearbeitung so zu steuern, dass sich ein möglichst exakter Übergang zwischen der Kaschierung und der Flächenseite des plattenförmigen Werkstücks ergibt.

Eine weitere besonders vorteilhafte Verwendung der Markierungen in einem nachgelagerten Bearbeitungsprozess ist es, wenn die Markierungen genutzt werden, um das Format eines aus der Aufteilung des großformatigen Werkstücks hervorgegangenen Werkstücks zu ermitteln. Hierbei werden die relativen Positionen der Markierungen zueinander genutzt, um das Werkstück zu vermessen. Die Erfassung der Markierungen kann dabei insbesondere genutzt werden, um in Verbindung mit anderen bekannten oder gemessenen Relationen zwischen den Positionen der Markierungen und bestimmten Punkten des Werkstücks, insbesondere Positionen einzelner Markierungen relativ zu Schmalseiten des Werkstücks, das Format des Werkstücks zu ermitteln. Mit anderen Worten wird die - technisch aufwendige - direkte Vermessung des Formats des Werkstücks ersetzt durch eine indirekte Vermessung des Formats des Werkstücks, bei der technisch einfacher zu erhaltende Abmessungsinformationen mit den relativen Positionen der Markierungen zueinander geometrisch bzw. rechnerisch kombiniert werden, um das Format des Werkstücks zu erhalten.

In vorteilhafter Weise sind die Markierungen für eine Qualitätssicherungsmaßnahme nutzbar. Hierunter ist insbesondere zu verstehen, dass das Ergebnis der Vermessung des Formats des plattenförmigen Werkstücks unter Verwendung der Positionen der Markierungen mit einem Vorgabewert verglichen wird. Hierbei werden bevorzugt Toleranzen berücksichtigt, die besonders bevorzugt von den jeweiligen Qualitätsanforderungen an das jeweilige aus der Aufteilung des großformatigen Werkstücks hervorgegangene plattenförmige Werkstück abhängen. Auf diese Weise kann automatisiert entschieden werden, ob dieses Werkstück die Anforderungen an sein Format erfüllt oder nicht. Erfüllt das Werkstück die Anforderungen, so kann es vorzugsweise im Produktionsprozess verbleiben. Werkstücke, die die Anforderungen nicht erfüllen, werden bevorzugt automatisch aussortiert und/oder einer Nachbearbeitung zugeführt.

Ein besonderer Vorteil des erfindungsgemäßen Verfahrens ist es, dass etwaige Nachbearbeitungen einzelner Werkstücke ebenfalls in vorteilhafter Weise durch die aufgebrachten Markierungen vereinfacht werden. Stellt sich beispielsweise heraus, dass die Abmessungen eines Werkstücks nicht den Vorgaben entsprechen, so können die Markierungen, insbesondere die Positionen der Markierungen, für die Nachbearbeitung, insbesondere für die Steuerung der Nachbearbeitung, des jeweiligen Werkstücks genutzt werden. Beispielsweise können die Positionen der Markierungen bei einem erneuten Aufspannen des Werkstücks genutzt werden, um die exakte Position des Werkstücks in einfacher Weise zu ermitteln.

Das erfindungsgemäße Verfahren eignet sich in vorteilhafter Weise für die Nutzung der Markierungen im Rahmen einer weiteren Bearbeitung der aus der Aufteilung des großformatigen Werkstücks hervorgegangenen Werkstücke, sowohl im Fall einer weiteren Bearbeitung auf sogenannten Durchlaufmaschinen als auch für den Fall einer weiteren Bearbeitung auf sogenannten Bearbeitungszentren.

Unter Durchlaufmaschinen sind in diesem Zusammenhang solche Bearbeitungseinrichtungen zu verstehen, bei denen die Werkstücke während deren Bearbeitung, vorzugsweise kontinuierlich, durch verschiedene Bearbeitungsstationen gefördert werden, wobei die einzelnen Bearbeitungsstationen nacheinandergelagerte Bearbeitungsschritte an den Werkstücken vornehmen. Bevorzugt wird während eines Durchlaufs durch eine Durchlaufmaschine zunächst eine Schmalseite bearbeitet, die weiteren Schmalseiten werden entweder in weiteren Durchläufen der gleichen Durchlaufmaschine oder in weiteren Durchlaufmaschinen bearbeitet. Hierbei werden Durchlaufmaschinen regelmäßig mit geeigneten Fördereinrichtungen kombiniert, um entsprechende Rückführungen und/oder Kreisläufe zur Bearbeitung aller Schmalseiten des jeweiligen Werkstücks zu realisieren.

Durchlaufmaschinen eignen sich insbesondere für die Bearbeitung von Werkstücken mit rechteckigem Querschnitt. Im Zusammenhang mit der vorliegenden Erfindung ist die Kombination einer Durchlaufbearbeitung mit dem erfindungsgemäßen Verfahren für durch die Aufteilung des großformatigen Werkstücks erzeugte Werkstücke mit rechteckigem Querschnitt besonders vorteilhaft, insbesondere da während der Durchlaufbearbeitung Abmessungen zwischen den Schmalseiten und den Markierungen in einfacher und damit vorteilhafter Weise ermittelt bzw. diese Abstände festgelegt werden können.

Unter Bearbeitungszentren hingegen sind insbesondere solche Bearbeitungseinrichtungen zu verstehen, bei denen das Werkstück, zumindest im Wesentlichen, ruht, während Bearbeitungsaggregate um das Werkstück herum bewegt werden, um die Bearbeitung vorzunehmen. Nacheinander gelagerte Bearbeitungsschritte werden hierbei vorzugsweise vorgenommen, ohne dass die Position des Werkstücks verändert wird. Zwar kann bei Bearbeitungszentren ebenfalls eine Bewegung des Werkstücks, beispielsweise dessen Rotation und/oder eine Zustellbewegung während der Bearbeitung, erfolgen, es kommt jedoch nicht zu der für Durchlaufmaschinen charakteristischen Förderung der Werkstücke von Bearbeitungsstation zu Bearbeitungsstation.

Bearbeitungszentren eignen sich insbesondere für durch die Aufteilung des großformatigen Werkstücks erzeugte Werkstücke mit komplexen Geometrien der Flächenseiten. Die Stärke der Bearbeitungszentren, nämlich die - zumindest weitgehend - freie Positionierbarkeit der Bearbeitungsaggregate, erlaubt die Herstellung und/oder Bearbeitung nahezu beliebiger Werkstückformen. In Kombination mit dem erfindungsgemäßen Verfahren ist dies auch im Hinblick darauf besonders vorteilhaft, dass Abstände zwischen Schmalseiten und Markierungen auch bei komplexen und von Werkstück zu Werkstück unterschiedlichen Geometrien der Flächenseite ermittelt bzw. festgelegt werden können. Die Bearbeitungszentren erlauben es, Markiereinrichtungen und/oder Erkennungseinrichtungen - analog zu den Bearbeitungsaggregaten - nahezu beliebig relativ zu dem Werkstück und insbesondere zu dessen Schmalseiten zu positionieren.

Die Erfindung wird im Folgenden anhand der Figuren 1 bis 7 schematisch näher erläutert.
Fig. 1 zeigt eine schematische Darstellung eines großformatigen plattenförmigen Werkstücks mit den für dessen Aufteilung durchzuführenden Schnitten und erfindungsgemäßen Markierungen.
Fig. 2 zeigt eine schematische Darstellung der Ermittlung der Position der bei der Aufteilung durchzuführenden Schnitte in einer schematischen Darstellung.
Fig. 3 zeigt eine beispielhafte Erkennungseinrichtung zur Erkennung der Markierungen auf den Werkstücken.
Fig. 4 zeigt eine Anordnung zur Erkennung der Markierungen auf den Werkstücken mit einer Mehrzahl Erkennungseinrichtungen.
Fig. 5 zeigt eine schematische Darstellung der Verwendung erfindungsgemäßer Markierungen in einem nachgelagerten Bearbeitungsprozess zur Messung der Dicke eines Kantenbandes.
Fig. 6 zeigt eine Detaildarstellung eines Teils der Fig. 5.
Fig. 7 zeigt eine schematische Darstellung der Verwendung erfindungsgemäßer Markierungen in einem nachgelagerten Bearbeitungsprozess zur Messung des Formats eines aus der Aufteilung hervorgegangenen Werkstücks.

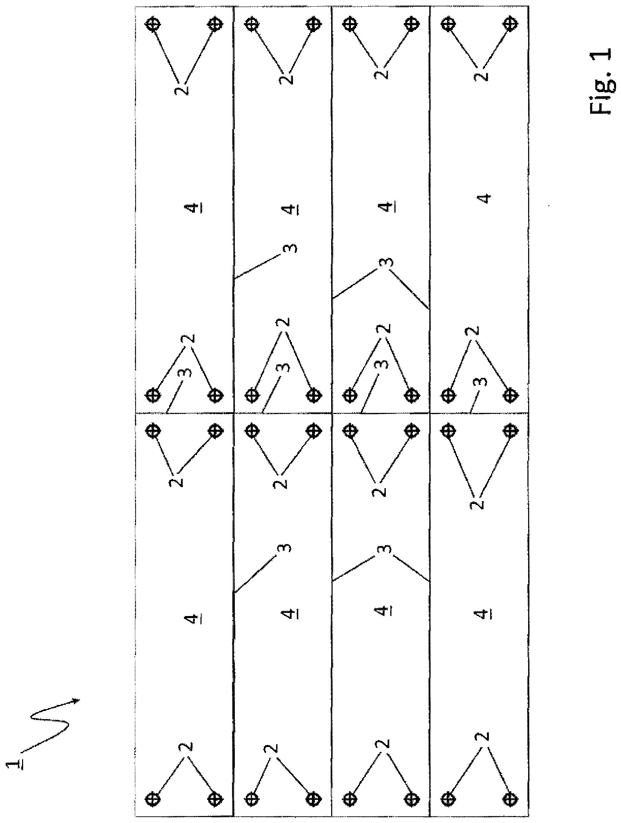

In Fig. 1 ist ein beispielhaftes großformatiges Werkstück 1 dargestellt. Das großformatige Werkstück 1 wird nach dem erfindungsgemäßen Verfahren auf einer Flächenseite mit Markierungen 2 versehen. Die Schnittlinien 3 repräsentieren die Positionen der durchzuführenden Schnitte, um das großformatige Werkstück 1 in eine Mehrzahl durch die Aufteilung des Werkstücks 1 erzeugten Werkstücke bzw. Fertigteile 4 aufzuteilen. Nach dem erfindungsgemäßen Verfahren werden die Markierungen 2 für die Steuerung dieser Aufteilung genutzt. Dies bedeutet insbesondere, dass im gezeigten Beispiel die Positionen der Markierungen 2 es ermöglichen, dass die Steuerung einer für die Aufteilung des großformatigen Werkstücks 1 verwendeten Vorrichtung die Markierungen 2, insbesondere die Positionen der Markierungen 2, nutzt, um die Schnitte bei der Aufteilung entlang der Schnittlinien 3 durchzuführen. Bevorzugt werden die Markierungen 2 also vor Aufteilen des großformatigen Werkstücks 1 auf diesen so positioniert, dass sie nach dem Aufteilen des großformatigen Werkstücks in Fertigteile 4 noch auf, an oder in den Fertigteilen 4 vorhanden sind. Nach dem Aufteilen können daher Verschnittteile ausgesondert bzw. der Verschnitt zum Beispiel durch Zerspanen entfernt werden, während die Markierungen zur Weiterverarbeitung der von Verschnitt befreiten Fertigteile 4 weiterhin zur Verfügung stehen.

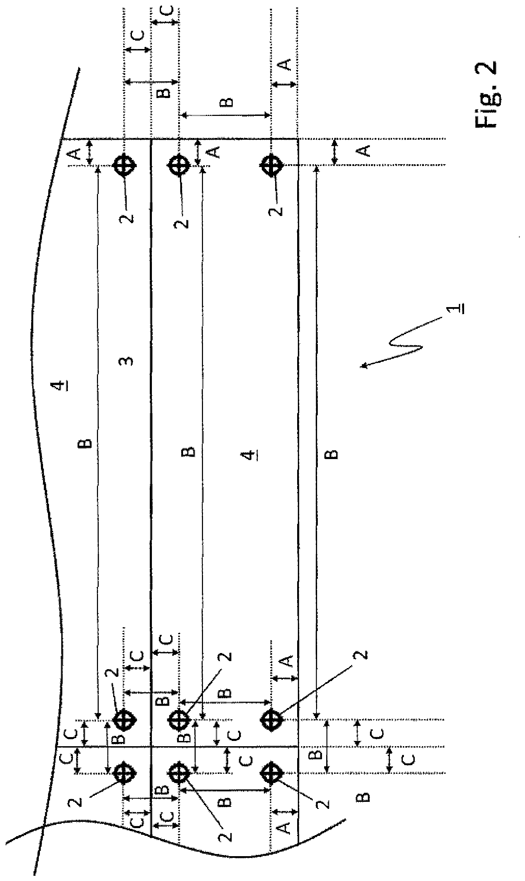

Die Ermittlung der Positionen der Schnittlinien 3 mit Hilfe der Markierungen 2 ist in Fig. 2 schematisch dargestellt. So können im gezeigten Beispiel einzelne Markierungen 2 in definierten Abständen A von den Schmalseiten 5 des großformatigen Werkstücks 1 positioniert werden. Alternativ ist es ebenfalls möglich, die Abstände A dieser Markierungen 2 von den Schmalseiten 5 des großformatigen Werkstücks 1 zu ermitteln. Dies kann auf konventionelle Art und Weise, beispielsweise mittels eines Anschlags oder eines Tastelements in Verbindung mit einer Erkennungseinrichtung 6 zum Erkennen der Markierungen 2 erfolgen.

Bevorzugt werden hierbei die Abstände der Markierungen 2 zu den Schmalseiten 5 des großformatigen Werkstücks 1 ermittelt und/oder festgelegt, die den Schmalseiten 5 am nächsten liegen. Auf diese Weise müssen lediglich kurze Distanzen zwischen Markierungen 2 und Schmalseiten 5 ermittelt und/oder festgelegt werden. Dies kann technisch vergleichsweise einfach und präzise realisiert werden.

Um die Positionen der Schnittlinien 3 ansteuern zu können, werden dann im gezeigten Beispiel weitere Abstände B zwischen Markierungen 2 ermittelt und/oder festgelegt. Im gezeigten Beispiel kann so in vorteilhafter Weise die Vermessung und/oder das Festlegen der Abstände B zwischen den einzelnen Markierungen 2 erfolgen, ohne dass hierfür erneut eine Position einer Markierung relativ zu einer Schmalseite 5 des großformatigen Werkstücks 1 ermittelt werden muss. Es kann vielmehr auf die bereits bekannten Abstände A zwischen einzelnen Markierungen 2 und Schmalseiten 5 des Werkstücks 1 zurückgegriffen werden, um die Positionen weiterer Markierungen 2 relativ zu den Schmalseiten 5 des Werkstücks 1 zu ermitteln.

Im gezeigten Beispiel werden dann in vorteilhafter Weise mittels der bekannten Positionen der Markierungen 2 relativ zu den Schmalseiten 5 Abstände C zwischen Markierungen 2 und den Schnittlinien 3 eines gewünschten Schnittplanes ermittelt. Auf diese Weise können die Positionen der Schnittlinien 3 auf der Flächenseite des Werkstücks 1 errechnet und eine Vorrichtung zur Durchführung der Schnitte entsprechend angesteuert werden.

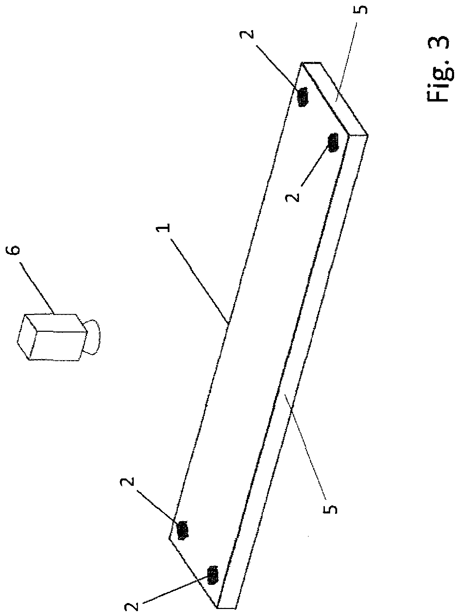

In Fig. 3 ist eine beispielhafte Erkennungseinrichtung 6 gezeigt. Dies ist im gezeigten Beispiel als Kamera ausgeführt. Die in Fig. 3 gezeigte Erkennungseinrichtung 6 ermöglicht es, Markierungen 2 auf der gesamten Flächenseite des Werkstücks 1 zu erkennen.

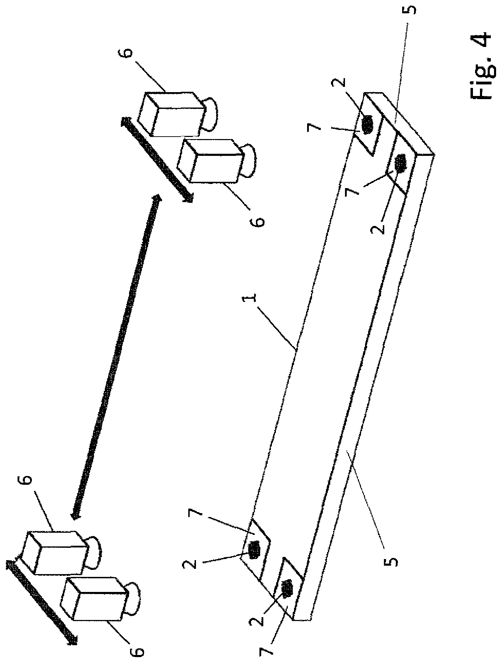

Die in Fig. 4 gezeigte Anordnung aus einer Mehrzahl Erkennungseinrichtungen 6 ermöglicht es hingegen, mit den einzelnen Erkennungseinrichtungen 6 jeweils bestimmte Bereiche 7 auf der Flächenseite des Werkstücks 1 zu erfassen. Auf diese Weise können die Markierungen 2 in den Bereichen 7 erfasst werden, wobei nur ein wesentlich geringerer Teil der Flächenseite des Werkstücks 1 erfasst werden muss. Ist die auf die erfasste flächenbezogene Auflösung gleich, muss so lediglich ein Bruchteil der Bildpunkte erfasst und ausgewertet werden, den eine einzelne Erkennungseinrichtung 6 erfassen müsste. Dabei sind die einzelnen Erkennungseinrichtungen 6 in vorteilhafter Weise relativ zum Werkstück 1 verfahrbar. Auf diese Weise können Bereiche 7 an unterschiedlichen Positionen der Flächenseite eines Werkstücks 1 bzw. auf unterschiedlich großen Werkstücken 1 erfasst werden.

In vorteilhafter Weise können auch die in Fig. 3 und Fig. 4 gezeigten Erkennungseinrichtungen 6 kombiniert werden. Zum Beispiel kann zunächst mit einer Erkennungseinrichtung 6 nach Fig. 3 ermittelt werden, in welchen Bereichen 7 der Flächenseite des Werkstücks 1 sich Markierungen befinden. Hierfür reicht eine niedrigere Auflösung bezogen auf die Flächenseite. Im nächsten Schritt können Erkennungseinrichtungen 6 nach Fig. 4 gezielt die so ermittelten Bereiche 7 erfassen und mit hohen Auflösungen bezogen auf die Flächenseite die Positionen der Markierungen 2 gezielt ermitteln und/oder in den Markierungen enthaltene Informationen, wie beispielsweise QR-Codes, auslesen.

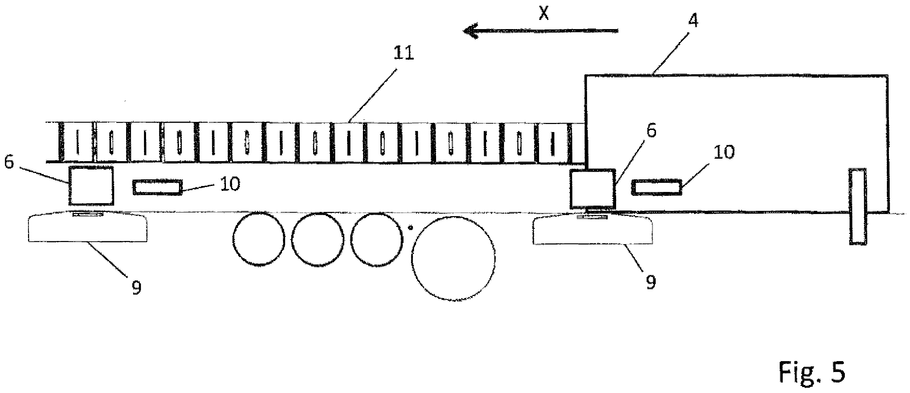

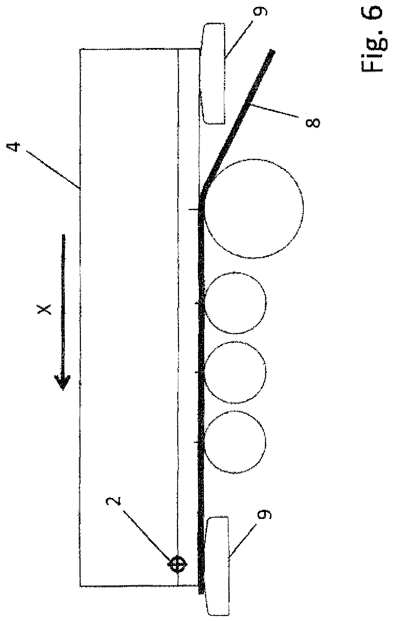

Nach einer vorteilhaften Weiterbildung des erfindungsgemäßen Verfahrens können die Markierungen 2 in einem nachgelagerten Bearbeitungsprozess genutzt werden. Ein solcher ist beispielhaft in den Fig. 5 und 6 dargestellt. Es handelt sich um das Aufbringen eines Kantenbandes 8 auf die Schmalseite 5 eines aus der Aufteilung eines großformatigen Werkstücks 1 hervorgegangenen Werkstücks bzw. Fertigteiles 4. Das Aufbringen des Kantenbandes 8 erfolgt im gezeigten Beispiel mittels einer Durchlaufmaschine. Diese verfügt über eine Fördereinrichtung 11, die Werkstücke oder Fertigteile 4 während ihrer Bearbeitung in Förderrichtung X transportiert.

Mittels der Markierungen 2 kann die Dicke des auf die Schmalseite 5 aufgebrachten Kantenbandes 8 ermittelt werden. Hierzu kommen im gezeigten Beispiel Tasteinrichtungen 9 zum Einsatz, die die Abstände zwischen Markierungen 2 und der Schmalseite 5, auf die das Kantenband 8 aufgebracht wird, messen. Die Abstände werden vor und nach dem Aufbringen des Kantenbandes 8 auf die Schmalseite 5 gemessen. Aus dem Vergleich beider Abstände lässt sich die Dicke des aufgebrachten Kantenbandes 8 ermitteln.

In vorteilhafter Weise kann im gezeigten Beispiel eine gezielte Beleuchtung der Markierungen 2 mittels Beleuchtungseinrichtungen 10 erfolgen. Hierdurch können die Markierungen 2 beispielsweise mit UV-Licht beleuchtet werden. In Verbindung mit UV-reaktiven Pigmenten, die unter UV-Licht fluoreszieren, können so für die Erkennungseinrichtungen 6 aufgrund der Beleuchtungseinrichtungen 10 erkennbare, jedoch für das menschliche Auge unter natürlichen Lichtverhältnissen unsichtbare Markierungen 2 verwendet werden.

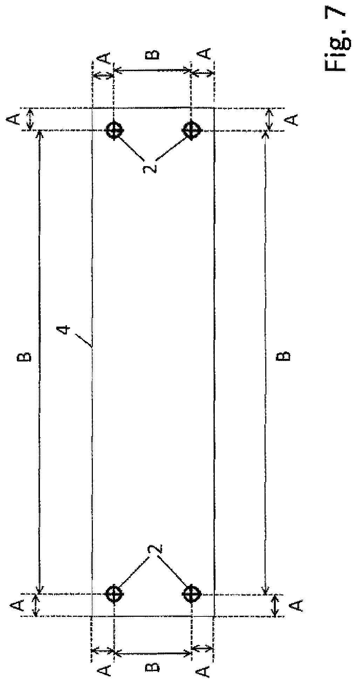

Ebenfalls lässt sich in einem nachgelagerten Bearbeitungsschritt das Format eines aus der Aufteilung des plattenförmigen Werkstücks 1 hervorgegangenen Werkstücks bzw. Fertigteils 4 ermitteln. Dies ist beispielhaft schematisch in Fig. 7 dargestellt. Das dort gezeigte Werkstück bzw. Fertigteil 4 weist Markierungen 2 auf, die sich in Abständen B voneinander befinden. Diese Abstände können - analog zum Vorgehen bei der Aufteilung des großformatigen Werkstücks 1 - in Verbindung mit Abständen A der Markierungen 2 von den Schmalseiten 5 des Werkstücks bzw. Fertigteils 4 genutzt werden, um das Format des plattenförmigen Werkstücks bzw. Fertigteils 4 zu ermitteln. In vorteilhafter Weise können hierbei beispielsweise Abstände A verwendet werden, die im Rahmen der Messung der Dicke eines aufgebrachten Kantenbandes 8 ermittelt worden sind. In Verbindung mit den bekannten, gegebenenfalls bereits aus der Aufteilung des großformatigen Werkstücks 1 bekannten, Abständen B ist so die rechnerische Ermittlung des Formats des Werkstücks bzw. Fertigteils 4 - beispielsweise im Rahmen einer Qualitätskontrolle - möglich, ohne das gesamte Werkstück bzw. Fertigteil 4 auf konventionelle Weise vermessen zu müssen.

## Patentansprüche

1. Verfahren zum Aufteilen eines großformatigen plattenförmigen Werkstücks (1), insbesondere aus Holz oder einem Holzersatzwerkstoff, wobei das großformatige plattenförmige Werkstück (1) in eine Mehrzahl kleinerer plattenförmiger Werkstücke aufgeteilt wird, wobei Markierungen (2) auf einer Flächenseite des großformatigen Werkstücks (1) identifiziert und auf die Flächenseite des großformatigen Werkstücks (1) aufgebracht werden, wobei die Markierungen (2), insbesondere die Positionen der Markierungen (2), für die Steuerung der Aufteilung des großformatigen plattenförmigen Werkstücks (1) genutzt werden und die Markierungen (2) in Abhängigkeit von der durchzuführenden Aufteilung positioniert werden,
**dadurch gekennzeichnet,**
**dass** das großformatige Werkstück (1) beim Aufteilen in von Verschnitt separierte Fertigteile aufgeteilt wird, wobei die Markierungen (2) auf dem großformatigen Werkstück (1) so positioniert sind, dass sie sich nach Aufteilen des großformatigen Werkstücks (1) auf oder an den vom Verschnitt bzw. Verschnittteilen separierten Fertigteilen befinden, wobei der Verschnitt bzw. die Verschnittteile ausgesondert oder zerspant werden, und
wobei die Markierung (2) eine optische Markierung (2) ist, die für das menschliche Auge nicht sichtbar ist und/oder die nach einer definierten Zeitspanne für das menschliche Auge nicht mehr sichtbar ist und/oder die nur unter bestimmten Beleuchtungsverhältnissen optisch nachweisbar ist.

2. Verfahren nach Anspruch 1,
**dadurch gekennzeichnet,**
**dass** wenigstens eine der Markierungen (2) Informationen über das Werkstück (1), insbesondere über die Beschaffenheit des Werkstücks (1), die Abmessungen des Werkstücks (1), an dem Werkstück (1) durchzuführende Bearbeitungsschritte, vorzugsweise den Schnittplan für die Aufteilung des Werkstücks (1), und/oder die individuelle Identifikation des Werkstücks (1), enthält.

3. Verfahren nach einem der vorigen Ansprüche,
**dadurch gekennzeichnet,**
**dass** relative Positionen der Markierungen (2) zueinander vermessen werden und/oder die Markierungen (2) in einer definierten relativen Position zueinander positioniert werden.

4. Verfahren nach einem der vorigen Ansprüche,
**dadurch gekennzeichnet,**
**dass** die Markierungen (2) in definierten Positionen relativ zu den Schmalseiten (5) des großformatigen plattenförmigen Werkstücks (1) positioniert werden und/oder die relativen Positionen der Markierungen (2) zu Schmalseiten (3) des großformatigen plattenförmigen Werkstücks (1) gemessen werden.

5. Verfahren nach einem der vorigen Ansprüche,
**dadurch gekennzeichnet,**
**dass** die Erkennung der Markierungen (2), insbesondere die Ermittlung der Positionen der Markierungen (2), berührungslos, insbesondere optisch, erfolgt.

6. Verfahren nach einem der vorigen Ansprüche,
**dadurch gekennzeichnet,**
**dass** eine Erkennungseinrichtung (6) relativ zum Werkstück (1) verfahren wird, insbesondere um gezielt die Bereiche des Werkstücks (1), in denen sich Markierungen (2) befinden, zu erfassen.

7. Verfahren nach einem der vorigen Ansprüche,
**dadurch gekennzeichnet,**
**dass** die Erkennung der Markierungen (2), insbesondere die Ermittlung der Positionen der Markierungen (2) mit einer Mehrzahl Erkennungseinrichtungen (6), insbesondere Kameras, erfolgt, wobei die Erkennungseinrichtungen (6) vorzugsweise relativ zueinander verfahren werden, insbesondere um die Positionen der Markierungen (2) auf unterschiedlich großen Werkstücken (1) zu ermitteln.

8. Verfahren nach einem der vorigen Ansprüche,
**dadurch gekennzeichnet,**
**dass** die Markierungen (2) nach der Aufteilung des großformatigen plattenförmigen Werkstücks (1) in e inem nachgelagerten Bearbeitungsprozess und/oder Logistikprozess genutzt werden, insbesondere zur Verfolgung und/oder Identifizierung eines aus der Aufteilung des plattenförmigen Werkstücks (1) hervorgegangenen Werkstücks (4).

9. Verfahren nach einem der vorigen Ansprüche,
**dadurch gekennzeichnet,**
**dass** die Position einer Markierung (2), vorzugsweise einer Mehrzahl Markierungen (2), zur Ermittlung der Dicke einer auf eine Schmalseiten (5) eines durch die Aufteilung des großformatigen Werkstücks (1) erzeugten Werkstücks (4) aufgebrachten Kaschierung, insbesondere eines Kantenbandes (8), genutzt wird.

10. Verfahren nach einem der vorigen Ansprüche,
**dadurch gekennzeichnet,**
**dass** die Positionen der Markierungen (2) für eine Ermittlung des Formats eines durch die Aufteilung des großformatigen Werkstücks (1) erzeugten Werkstücks, insbesondere im Rahmen einer Qualitätssicherungsmaßnahme genutzt werden, wobei vorzugsweise die Ermittlung des Formats aufgrund der relativen Positionen der Markierungen (2) untereinander und relativ zu den Schmalseiten (5) des durch die Aufteilung des großformatigen Werkstücks (1) erzeugten Werkstücks (4) erfolgt.

## Claims

1. Method of dividing a large-format panel-shaped workpiece (1), in particular of wood or a wood substitute, wherein the large-format panel-shaped workpiece (1) is divided into a number of smaller panel-shaped workpieces, wherein markings (2) on a flat side of the large-format workpiece(1) are identified and are applied to the flat side of the large-format workpiece(1), wherein the markings (2), in particular the positions of the markings (2), are used for controlling the division of the large-format panel-shaped workpiece (1) and the markings (2) are positioned in dependence on the division which is to be carried out, **characterised in that** the large-format workpiece (1) during division is divided into finished parts separated from the offcut, wherein the markings (2) are positioned on the large-format workpiece (1) so that after dividing up the large-format workpiece (1) they are located on the finished parts separated from the offcut or offcut parts, wherein the offcut or offcut parts are discarded or machined, and wherein the marking (2) is an optical marking (2) which is not visible to the human eye and/or which after a defined time interval is no longer visible to the human eye and/or which can only be detected optically under certain light conditions.

2. Method according to claim 1 **characterised in that** at least one of the markings (2) contains information about the workpiece (1), in particular about the condition of the workpiece (1), the dimensions of the workpiece (1), machining steps to be carried out on the workpiece (1), preferably the cutting plan for dividing up the workpiece (1), and/or the individual identification of the workpiece (1).

3. Method according to one of the preceding claims **characterised in that** relative positions of the markings (2) with respect to each other are measured and/or the markings (2) are positioned in a defined relative position with respect to each other.

4. Method according to one of the preceding claims **characterised in that** the markings (2) are positioned in defined positions relative to the narrow sides (5) of the large-format panel-shaped workpiece (1), and/or the relative positions of the markings (2) with respect to the narrow sides (3) of the large-format panel-shaped workpiece (1) are measured.

5. Method according to one of the preceding claims **characterised in that** identifying the markings (2), in particular determining the positions of the markings (2), is carried out contactlessly, in particular optically.

6. Method according to one of the preceding claims **characterised in that** an identifying device (6) is moved relative to the workpiece (1), in particular in order to detect specifically the regions of the workpiece (1) in which the markings (2) are situated.

7. Method according to one of the preceding claims, **characterised in that** identifying the markings (2), in particular determining the position of the markings (2) is carried out with a number of identifying devices (6), in particular cameras, wherein the identifying devices (6) are moved preferably relative to one another, in particular in order to determine the positions of the markings (2) on different sized workpieces (1).

8. Method according to one of the preceding claims **characterised in that** after the division of the large-format panel-shaped workpiece (1) the markings (2) are used in a subsequent machining process and/or logistics process, in particular to track and/or identify a workpiece (4) produced from the division of the panel-shaped workpiece (1).

9. Method according to one of the preceding claims **characterised in that** the position of a marking (2), preferably of a number of markings (2), is used for determining the thickness of a lining, in particular an edging strip (8), applied to a narrow side (5) of a workpiece (4) produced by dividing up the large-format workpiece (1).

10. Method according to one of the preceding claims, **characterised in that** the positions of the markings (2) are used for determining the format of a workpiece produced by dividing up the large-format workpiece (1), in particular within the scope of a quality assurance measure, wherein determining the format is preferably carried out based on the relative positions of the markings (2) with respect to each other and with respective to the narrow sides (5) of the workpiece (4) produced by dividing up the large-format workpiece (1).

## Revendications

1. Procédé de division d'une pièce (1) de grande taille en forme de plaque, surtout en bois ou un matériau de substitution du bois, dans lequel la pièce (1) de grande taille en forme de plaque est divisée en une pluralité de pièces de grande taille en forme de plaque plus petites, dans lequel des marquages (2) sont identifiées sur un côté de la surface et appliquées sur le côté de la surface de la pièce de grande taille (1), dans lequel les marquages (2), surtout les positions des marquages (2), sont utilisés pour le contrôle de la division de la pièce (1) de grande taille en forme de plaque, et les marquages (2) sont positionnés en fonction de la division à effectuer,
**caractérisée en ce que**
la pièce de grande taille (1), lors de sa division, est divisée en pièces finies séparées des rognures, dans lequel les marquages (2) sont positionnés sur la pièce de grande taille (1) de telle sorte que, après la division de la pièce de grande taille (1), ils se trouvent sur les pièces finies séparées des rognures et / ou des pièces de rognures, dans lequel les rognures et / ou les pièces de rognures sont éliminées ou coupées, et
dans lequel le marquage (2) est un marquage optique, qui n'est pas visible pour l'œil humain et / ou qui n'est plus visible pour l'œil humain après une période de temps définie et / ou qui n'est détectable optiquement que dans certaines conditions d'éclairage.

2. Procédé selon la revendication 1,
**caractérisée en ce**
**qu'**au moins un des marquages (2) contient des informations concernant la pièce (1), surtout concernant la nature de la pièce (1), les dimensions de la pièce (1), des étapes de traitement à effectuer sur la pièce (1), de préférence, le plan de coupe pour la division de la pièce (1), et / ou l'identification individuelle de la pièce (1).

3. Procédé selon l'une quelconque des revendications,
**caractérisée en ce**
**que** les positions relatives des marquages (2) sont mesurées les uns par rapport aux autres et / ou que les marquages (2) sont positionnés dans une position relative définie les uns par rapport aux autres.

4. Procédé selon l'une quelconque des revendications précédentes,
**caractérisée en ce**
**que** les marquages (2) sont positionnés dans des positions définies par rapport aux petits côtés (5) de la pièce (1) de grande taille en forme de plaque et / ou que les positions relatives des marquages (2) sont mesurées par rapport aux petits côtés (5) de la pièce (1) de grande taille en forme de plaque.

5. Procédé selon l'une quelconque des revendications précédentes,
**caractérisée en ce**
**que** la détection des marquages (2), surtout la détermination des positions des marquages (2), s'effectue sans contact, surtout de manière optique.

6. Procédé selon l'une quelconque des revendications précédentes,
**caractérisée en ce**
**qu'**un dispositif de détection (6) est déplacé par rapport à la pièce (1), surtout pour détecter spécifiquement les zones de la pièce (1) dans lesquelles il se trouvent des marquages (2).

7. Procédé selon l'une quelconque des revendications précédentes
**caractérisée en ce**
**que** la détection des marquages (2), surtout la détermination des positions des marquages (2), est effectuée avec une pluralité de dispositifs de détection (6), surtout des caméras, dans lequel les dispositifs de détection (6), de préférence, sont déplacés les uns par rapport aux autres, surtout pour déterminer les positions des marquages (2) sur des pièces (1) de différentes tailles.

8. Procédé selon l'une quelconque des revendications précédentes,
**caractérisée en ce**
**que** les marquages (2), après la division de la pièce (1) de grande taille en forme de plaque, sont utilisés dans un procédé de traitement et / ou un procédé logistique en aval, surtout pour le suivi et / ou l'identification d'une pièce (1) résultant de la division de la pièce en forme de plaque (5).

9. Procédé selon l'une quelconque des revendications précédentes
**caractérisée en ce**
**que**
la position d'un marquage (2), de préférence, d'une pluralité de marquages (2), est utilisée pour la détermination de l'épaisseur d'un laminage, surtout d'une alaise de chant, appliqué sur un petit côté (5) d'une pièce (4) obtenue par la division de la pièce de grande taille (1).

10. Procédé selon l'une quelconque des revendications précédentes,
**caractérisée en ce**
**que** les positions des marquages (2) sont utilisés pour une détermination du format d'une pièce obtenue par la division de la pièce de grande taille (1), surtout dans le cadre d'une mesure d'assurance de la qualité, dans lequel, de préférence, la détermination du format est effectuée sur la base des positions relatives des marquages (2) entre eux et par rapport aux petits côtés (5) de la pièce (4) obtenue par la division de la pièce de grande taille (1).
